# EUROPEAN PATENT SPECIFICATION

(11) **EP 4 467 246 B1**
(45) Date of publication and mention of the grant of the patent: **02.09.2026**
(21) Application number: 23846859.9
(22) Date of filing: 07.07.2023
(51) Int. Cl.: B05C 5/02, B05C 11/10, B05C 11/02

(54) **SLOT DIE COATER**
SCHLITZDÜSENBESCHICHTER
DISPOSITIF DE REVÊTEMENT À FILIÈRE À FENTE

(30) Priority: 28.07.2022 KR 20220094219; 09.03.2023 KR 20230031435
(43) Date of publication of application: 27.11.2024
(73) Proprietor: LG Energy Solution, Ltd., Seoul 07335 (KR)
(72) Inventor: PARK, Joon-Sun, Daejeon 34122 (KR); KIM, Guk-Tae, Daejeon 34122 (KR); KIM, Man-Hyeong, Daejeon 34122 (KR); LEE, Taek-Soo, Daejeon 34122 (KR); CHOI, Min-Hyuck, Daejeon 34122 (KR)
(74) Representative: Plasseraud IP
(86) International application number: PCT/KR2023/009631
(87) International publication number: WO 2024/025200

(56) References cited:
- CN-A- 114 733 714
- CN-A- 114 749 329
- KR-A- 20180 120 029
- KR-A- 20220 061 010
- KR-B1- 102 035 826
- KR-B1- 102 035 826
- KR-B1- 102 143 345

## Description

### TECHNICAL FIELD

The present disclosure relates to a slot die coater, and particularly, to a slot die coater that may be used to apply an insulating coating to the edge of a coating layer pattern.

### BACKGROUND ART

As the technology development and demand for mobile devices increase, demand for secondary batteries as an energy source is rapidly increasing. These secondary batteries essentially include an electrode assembly, which is a power generation element. The electrode assembly has a form in which a positive electrode, a separator, and a negative electrode are stacked at least once, and the positive electrode and the negative electrode are prepared by applying a positive electrode active material slurry and a negative electrode active material slurry to a current collector made of aluminum foil and copper foil, respectively, and drying.

These secondary batteries generally use lithium-containing cobalt oxide LiCoO₂ with a layered crystal structure, lithium-containing manganese oxides such as LiMnO₂ with a layered crystal structure and LiMn₂O₄ with a spinel crystal structure, and lithium-containing nickel oxide LiNiO₂, as positive electrode active materials. In addition, carbon-based materials are mainly used as negative electrode active materials, and recently, mixed use with silicon-based materials and silicon oxide-based materials having an effective capacity 10 times or more than carbon-based materials has been considered due to the increase in demand for high-energy lithium secondary batteries.

In order to ensure uniform charge/discharge characteristics of secondary batteries, the positive electrode active material slurry and the negative electrode active material slurry should be evenly coated on a current collector, and conventionally, a slot die coater is used.

In electrode active material layer coating using a slot die coater, there is a case where multiple electrode active material layers are coated in a band-shaped pattern on one current collector (multi-lane coating). The electrode active material slurry is filled into a manifold formed inside the die block and discharged toward the outlet.

In the case of a positive electrode active material layer, an insulating coating is additionally applied to the edges of the pattern (both sides) (hereinafter referred to as edge coating). In order to ensure that the characteristics of secondary batteries are uniform, the width/thickness of the edge coating should be uniform. For the edge coating, a sequential coating following the electrode active material layer coating, or a simultaneous coating with the electrode active material layer coating is used.

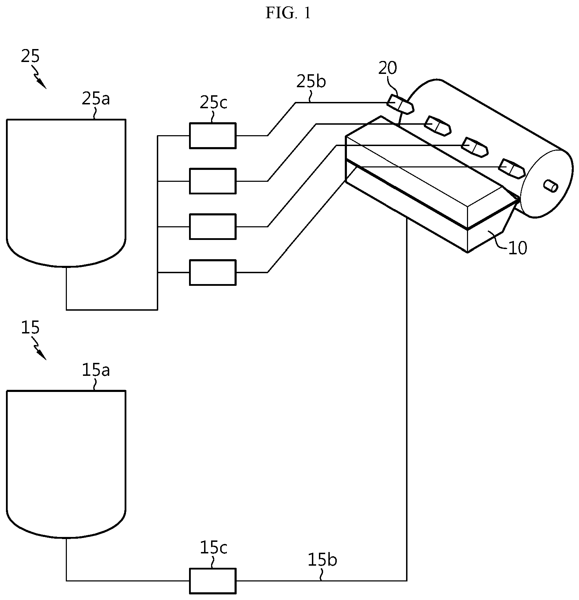

FIG. 1 shows an example of a manufacturing device configuration for conventional sequential coating.

Referring to FIG. 1, while coating an electrode active material layer through a slot die coater 10, edge coating is performed through a mini die 20 located above the slot die coater 10. The electrode active material slurry for coating the electrode active material layer is supplied to the slot die coater 10 through the slurry supply unit 15, and the insulating coating liquid for edge coating is supplied to the mini die 20 through the insulating coating liquid supply unit 25.

The slurry supply unit 15 includes a tank 15a storing the electrode active material slurry, a pipe 15b connecting the tank 15a and the slot die coater 10, and a pump and valve 15c that are installed in the pipe 15b and control the amount or on/off of the electrode active material slurry supply. Likewise, the insulating coating liquid supply unit 25 includes a tank 25a storing the insulating coating liquid, a pipe 25b connecting the tank 25a and the mini die 20, and a pump and valve 25c that are installed in the pipe 25b and control the amount or on/off of the insulating coating liquid supply.

In this device configuration, the slot die coater 10 and the mini die 20 are configured separately, which has the disadvantage of complicating the configuration of the manufacturing device and increasing the work time required for operation.

FIGS. 2 to 4 are views for describing a slot die coater for conventional simultaneous coating.

FIG. 2 is a perspective view of a conventional slot die coater 30. Referring to FIG. 2, the slot die coater 30 includes a lower die 40, a shim 50, and an upper die 60. The shim 50 defines an outlet 52 between the lower die 40 and the upper die 60.

FIG. 3 is an exploded perspective view of the slot die coater 30 shown in FIG. 2. Referring to FIG. 3, a manifold 42 that may contain the electrode active material slurry and then supply it toward the outlet 52 is formed in the lower die 40.

FIG. 4 is a plan view of the shim 50, as viewed from above, which is placed on the lower die 40 in the slot die coater 30 shown in FIG. 3, omitting the upper die 60.

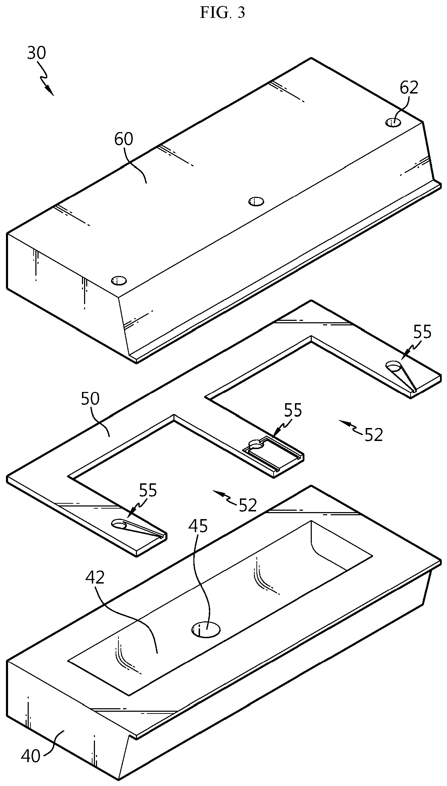

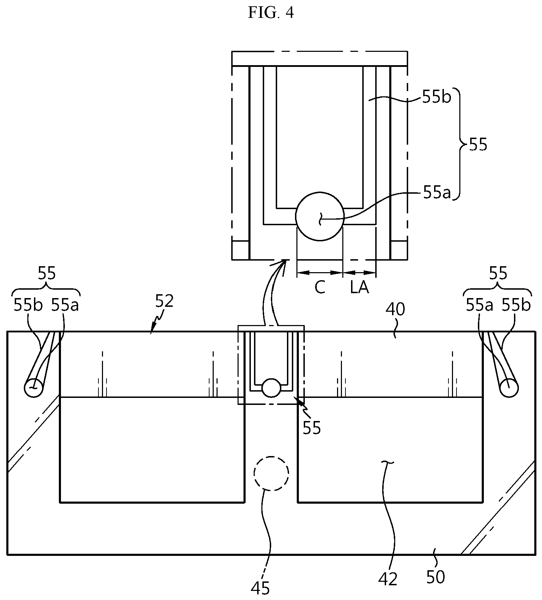

Referring to FIGS. 3 and 4, in simultaneous coating using the slot die coater 30, the electrode active material slurry supplied from the lower die 40 through the slurry injection hole 45 is contained in the manifold 42 and discharged toward the outlet 52, and the insulating coating liquid is supplied from the upper die 60 for edge coating. When it comes to the shim 50 interposed between the lower die 40 and the upper die 60, a flow path 55 for edge coating is formed. A hole for insulating coating 62 is formed in the upper die 60 so that the insulating coating liquid may be supplied to the shim 50.

In the flow path 55 of the shim 50, a hole 55a is formed to receive the insulating coating liquid from the hole for insulating coating 62, and a line 55b is connected to the hole 55a. In some of the holes 55a, two lines 55b are separated. An enlarged view of the hole 55a where the two lines 55b are separated is shown in FIG. 4. When the distance between edge coatings is short or to reduce the number of edge coating supply systems, multiple coatings are required on edges adjacent to each other in one feeding line, and thus the hole 55a at a position other than the side is coated with the insulating coating liquid separately in two lines 55b, as described above.

When coating with the insulating coating liquid by dividing it into two lines 55b, the flow rate should be divided evenly from the hole 55a to both sides, but there is a phenomenon that it cannot be divided evenly due to die block assembly tolerance or other disturbances. In the current structure, the size of the hole for insulating coating 62 and the size (diameter C) of the hole 55a in the shim 50 are the same. If the alignment of the shim 50 and the die block is even slightly deviated during assembly, there is a problem that the flow rate on each side is different due to the difference in the length of the path between the two lines 55b going out to both sides, resulting in varying width and thickness of the edge coating. Also, if the edge coating supply position of the upper die 60 and the shim 50 are misaligned due to processing deviation, the flow rate varies as described above.

Documents CN 114 749 329 A and KR 102 035 826 B1 disclose multi-row simultaneous coating dies.

### DISCLOSURE

### Technical Problem

The present disclosure is designed to solve the problems of the related art, and therefore the present disclosure is directed to providing a slot die coater to which an edge coating flow rate uniformity design is applied.

However, technical problems to be solved by the present disclosure are not limited to the above-described problems, and other problems not mentioned herein may be clearly understood by those skilled in the art from the following description of the present disclosure.

### Technical Solution

To solve this problem, the invention provides a slot die coater according to claim 1.

The slot die coater after the invention may present one or more feature(s) of dependent claims 2 to 9, in any combination allowed by the claims.

### Advantageous Effects

According to the present disclosure, a slot die coater to which an edge coating flow rate uniformity design is applied is provided.

In a slot die coater according to one aspect of the present disclosure, an additional first manifold is formed on the shim so that the flow rate of the insulating coating liquid, which is an edge coating liquid, may be stabilized before being discharged from the supply position to both sides. Accordingly, when edge coating is required by splitting from one to two lines, the flow rate of the insulating coating liquid is divided evenly. Even if a die block assembly tolerance or other disturbance occurs, it may be divided evenly due to the leveling role of the first manifold formed on the shim. Therefore, the problem of varying the coating width and thickness between the two edge coatings formed separately on both sides at the supply location of the insulating coating liquid may be solved.

According to another aspect of the present disclosure, a second manifold capable of containing the insulating coating liquid may be further formed in an upper die or a lower die, thereby making the flow rates entering both sides as equal as possible. If a second manifold is formed in the upper die or lower die at a position corresponding to the first manifold formed on the shim, the leveling area may be increased, and thus an edge coating equalization effect may be further improved.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 shows an example of a manufacturing device configuration for conventional sequential coating.

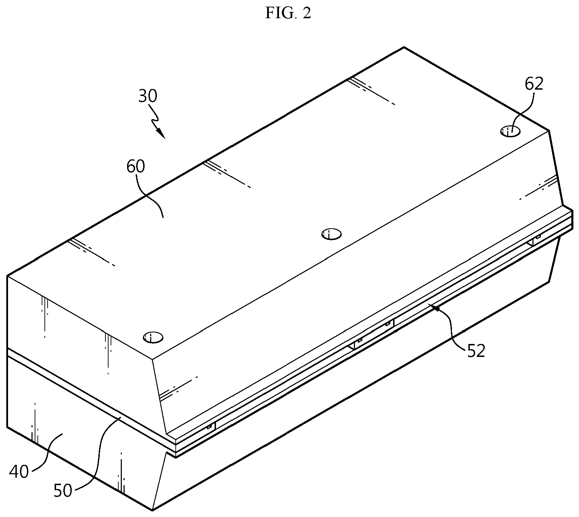

FIGS. 2 to 4 are views for describing a slot die coater for conventional simultaneous coating.

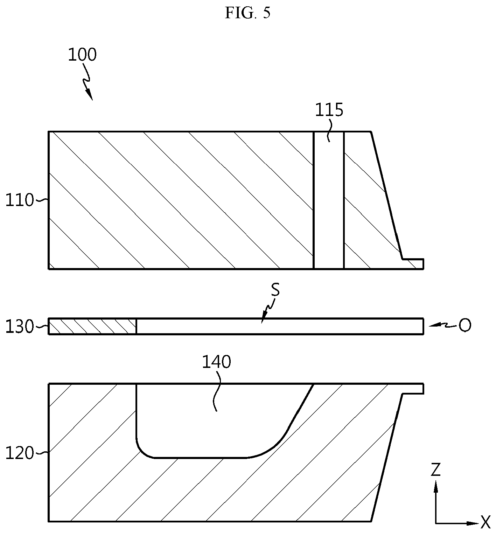

FIG. 5 is an exploded cross-sectional view schematically showing the configuration of a slot die coater according to the present disclosure.

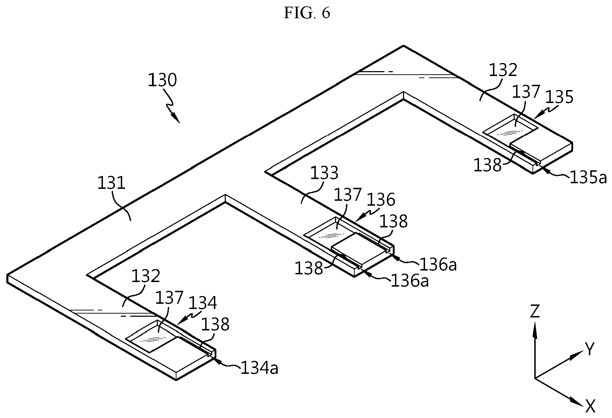

FIG. 6 is a perspective view of a shim that may be provided in the slot die coater according to the present disclosure.

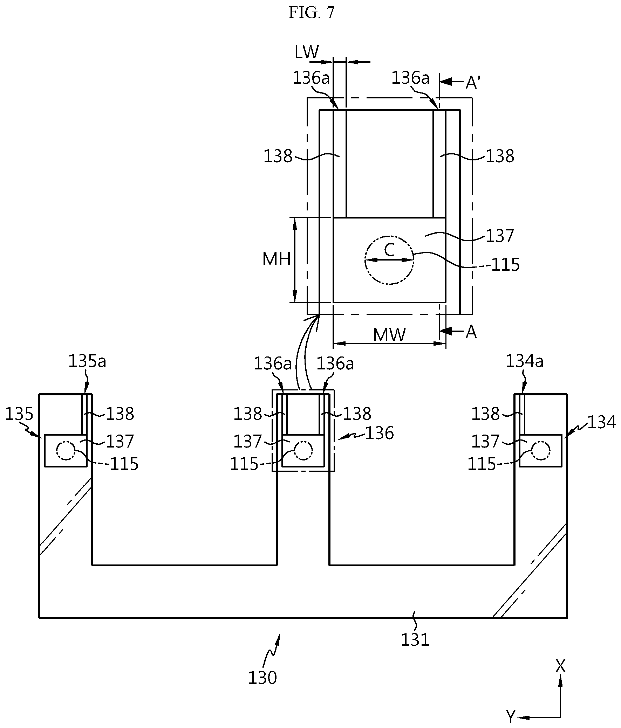

FIG. 7 is a plan view of the shim shown in FIG. 6.

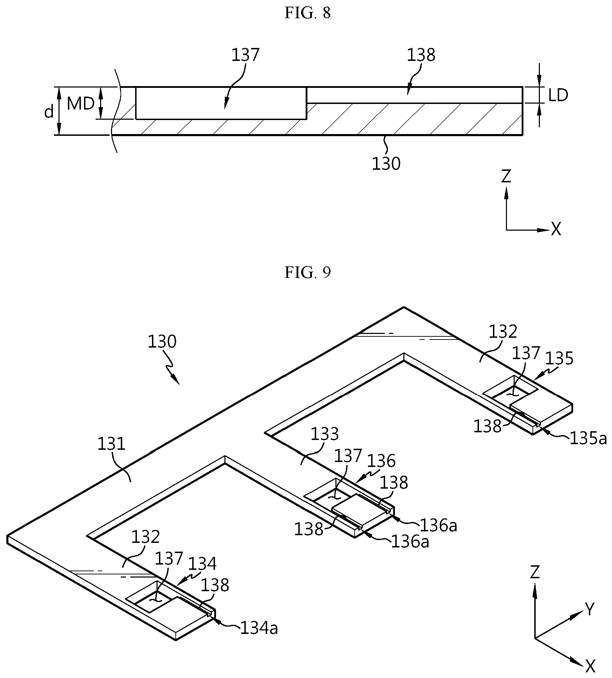

FIG. 8 is a cross-sectional view taken along line A-A' of FIG. 7.
FIG. 9 is a perspective view of another shim that may be provided in the slot die coater according to the present disclosure.

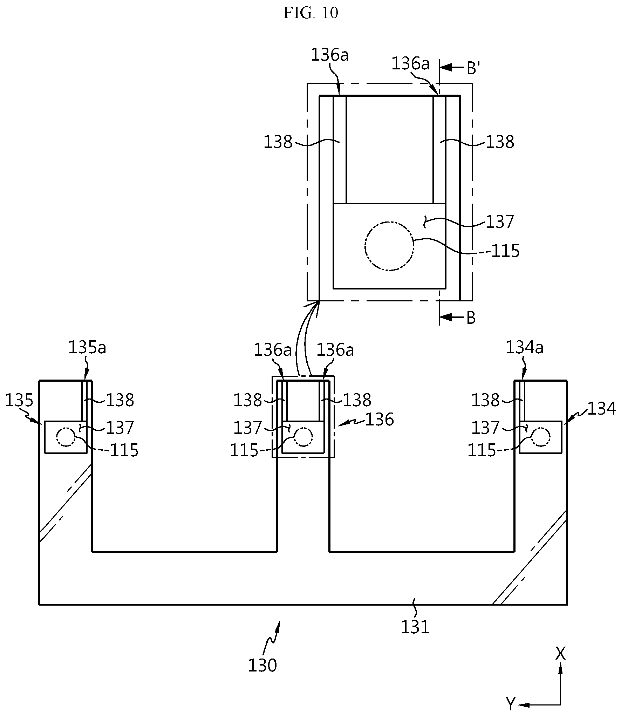

FIG. 10 is a plan view of the shim shown in FIG. 9.

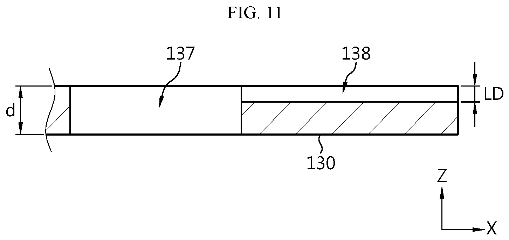

FIG. 11 is a cross-sectional view taken along line B-B' of FIG. 10.

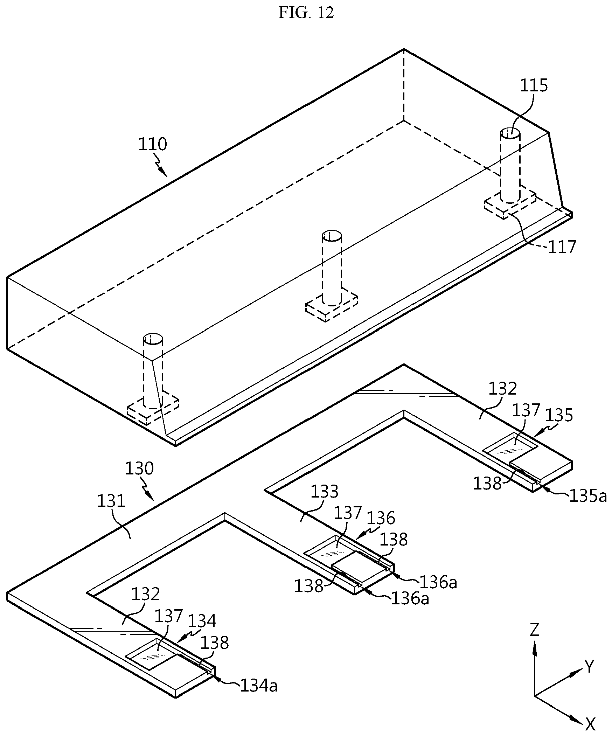

FIG. 12 is a view of a shim and an upper die provided in another slot die coater according to the present disclosure.

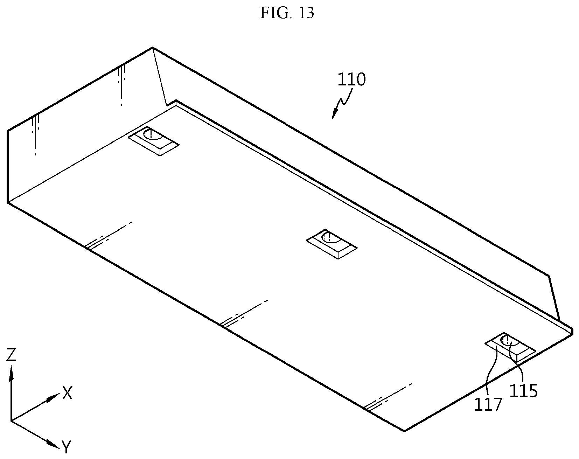

FIG. 13 is a bottom view of the upper die shown in FIG. 12.

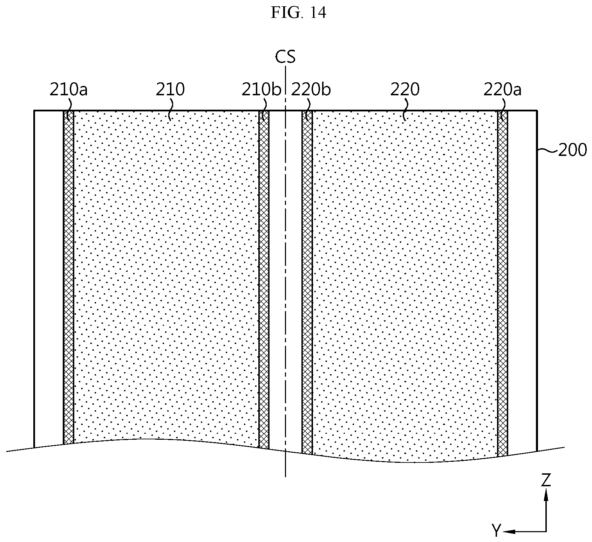

FIG. 14 shows a state in which a coating layer is formed on a substrate by a slot die coater including the shim shown in FIG. 6 or FIG. 9.

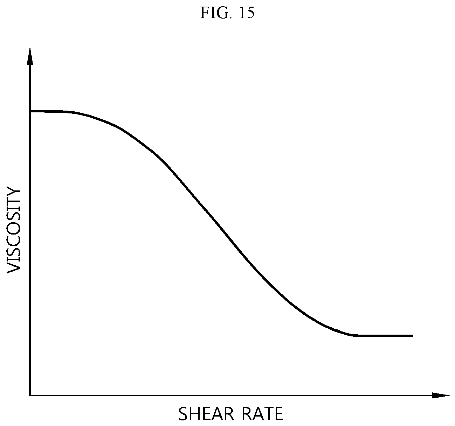

FIG. 15 shows the relationship between fluid viscosity and shear rate.

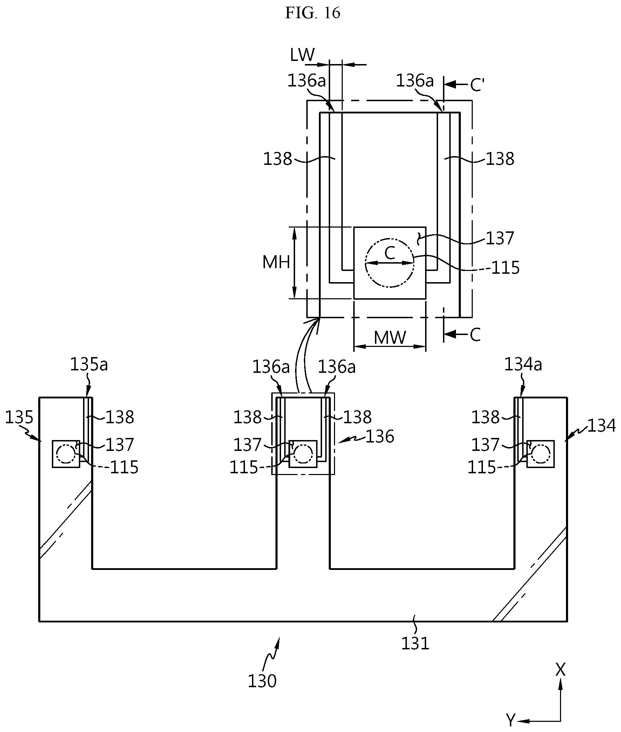

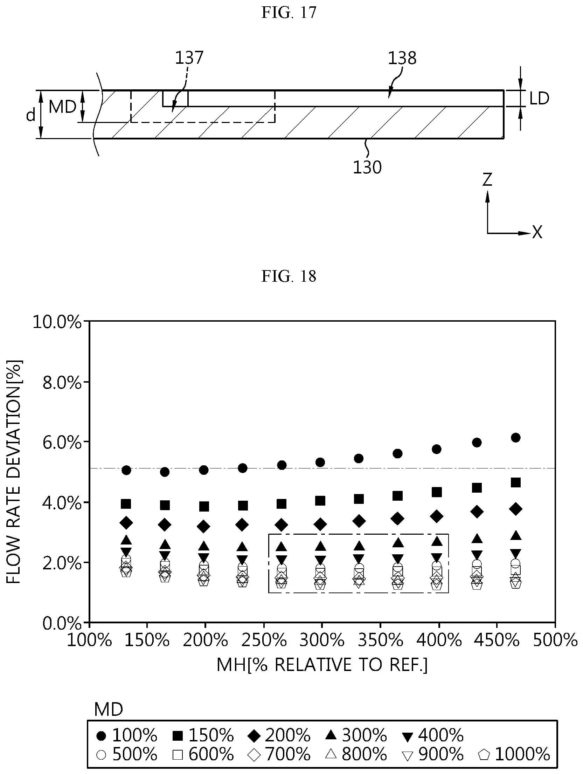

FIGS. 16 and 17 are views showing design factors considered in designing a first manifold and a slit.
FIGS. 18 to 21 are graphs showing the relationship between the height of the first manifold and the flow rate deviation at various viscosity ratios.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In order to clearly describe the present disclosure, portions that are not pertinent to the description are omitted, and the same reference numerals are applied to identical or similar components throughout the specification. In addition, the size and thickness of each component shown in the drawings are indicated arbitrarily for convenience of description, so the present disclosure is not necessarily limited to what is shown. Also, throughout the specification, when a portion is said to "include" a certain component, this means that it may not exclude other components, but may further include other components, unless specifically stated to the contrary.

The slot die coater of the present disclosure is a device that has a slot and coats a coating liquid on a substrate through the slot. The 'substrate' described below is a current collector, the 'coating liquid' is an electrode active material slurry, and the slot die coater of the present disclosure is a device capable of performing edge coating by further applying an insulating coating liquid to the edge of a coating layer pattern formed by applying the coating liquid. However, the scope of the present disclosure is not necessarily limited thereto.

The slot die coater has a manifold inside the die block for uniformly supplying/ discharging (leveling) the electrode active material slurry. In the present disclosure, an additional structure for uniformly supplying/discharging the insulating coating liquid for edge coating is formed on the shim. Since the leveling function is the same, this structure is also named a manifold. An additional manifold is basically formed on the shim, and the additional manifold formed on the shim is referred to as a first manifold for insulating coating. An additional manifold may be further formed on the upper die or lower die, which will be referred to as a second manifold for insulating coating.

FIG. 5 is an exploded cross-sectional view schematically showing the configuration of a slot die coater according to the present disclosure.

Referring to FIG. 5, the slot die coater 100 has a shim 130 interposed between the upper die 110 and the lower die 120 and includes a manifold 140 containing a coating liquid such as an electrode active material slurry in the lower die 120. The manifold 140 is formed to uniformly supply/discharge the coating liquid onto a substrate such as a current collector. The manifold 140 may be formed in the upper die 110, or may be formed in both the upper die 110 and the lower die 120.

The shim 130 is interposed between the upper die 110 and the lower die 120 to define a slot S and an outlet O. The upper die 110 and the lower die 120 are rectangular members whose width in the Y direction perpendicular to the X direction is longer than the length in the X direction toward which the outlet O faces. The shim 130 is in contact with the contact surface of the upper die 110 and the lower die 120, and may be assembled between the upper die 110 and the lower die 120 by a bolt (not shown) that fastens the upper die 110 and the lower die 120.

The shim 130 is a plate-shaped member having an opening by cutting at least one area to determine the coating width of the coating layer applied on the substrate. Here, the opening defines the slot S, and the end of the slot S becomes the outlet O. If there is one opening, one coating layer may be formed, and if there are two openings, two coating layers may be formed side by side along the Y direction. The manifold 140 may contain the electrode active material slurry supplied from a feed unit (not shown), and then the electrode active material slurry may be discharged through the outlet O communicating with the slot S to form the electrode active material layer.

The shim 130 may also function as a gasket that prevents the coating liquid from leaking through the gap between the die blocks 110, 120, except for the area where the outlet O is formed, thereby preferably being made of a material having sealing properties. The shim 130 may be made of, for example, plastic or metal, but the present disclosure is not limited thereto. The shim 130 may be, for example, a resin sheet such as Teflon or polyester, or a metal sheet such as copper or aluminum.

The manifold 140 is connected to an externally installed coating liquid supply chamber (not shown) through a supply pipe to receive the coating liquid, which is contained within the manifold 140. When the manifold 140 is filled with the coating liquid, the coating liquid is induced to flow along the slot S and is discharged to the outside through the outlet O.

For example, a coating roll provided to be rotatable may be disposed in front (X direction) of the slot die coater 100, and while moving the substrate to be coated by rotating the coating roll, the coating liquid may be discharged and in contact with the surface of the substrate to form a coating layer. For example, an electrode active material layer may be formed on the current collector.

Here, the slot die coater 100 is installed with the direction (X direction) of discharging the electrode active material slurry, which is a coating liquid, almost horizontal (approximately: ±5 degrees). However, it is not necessarily to be limited to the form exemplified herein, and for example, it may also be configured as a vertical die with the direction of discharging the electrode active material slurry in the Z direction (up), which is orthogonal to both the X and Y directions.

The slot die coater 100 is configured to enable to further apply an insulating coating liquid to the edge of the coating layer pattern formed by applying the coating liquid. For example, a hole for insulating coating 115 formed by vertically penetrating the upper die 110 is formed adjacent to the outlet O of the upper die 110. The shim 130 includes a flow path for the insulating coating liquid so that the insulating coating liquid supplied through the hole for insulating coating 115 may be applied to the edge of the coating layer by discharging it onto the substrate.

FIG. 6 is a perspective view of a shim that may be provided in the slot die coater according to the present disclosure, FIG. 7 is a plan view of the shim shown in FIG. 6, and FIG. 8 is a cross-sectional view taken along line A-A' of FIG. 7. FIG. 9 is a perspective view of another shim that may be provided in the slot die coater according to the present disclosure, FIG. 10 is a plan view of the shim shown in FIG. 9, and FIG. 11 is a cross-sectional view taken along line B-B' of FIG. 10. FIG. 14 shows a state in which a coating layer is formed on a substrate by a slot die coater including the shim shown in FIG. 6 or FIG. 9.

First, referring to FIGS. 6, 7, 9, and 10, the shim 130 includes a first portion 131 that is a base and at least three second portions 132, 133 extending from the first portion 131. The first portion 131 extends along the Y direction. In this embodiment, the number of second portions 132, 133 is three, which includes side second portions 132 included at both edges and a center second portion 133 included between the side second portions 132. The second portions 132, 133 are connected to the same side of the first portion 131 and extend in the X direction, which is the same direction, and spaces between the side second portions 132 and the center second portion 133 are defined as openings. These openings may define a slot S and an outlet O. Since this shim 130 has two openings, two coating layers 210, 220 may be formed simultaneously in the Y direction on the substrate 200, as shown in FIG. 14. In order to further increase the number of patterns of coating layers 210, 220 formed simultaneously, the shim 130 may include a larger number of center second portions 133.

The one located on the left side of the side second portions 132 includes a flow path 134 to form an edge coating layer 210a by applying an insulating coating liquid to the left edge of the coating layer 210 formed on the left side. The one located on the right side of the side second portions 132 includes a flow path 135 to form an edge coating layer 220a by applying an insulating coating liquid to the right edge of the coating layer 220 formed on the right side. The center second portion 133 includes a flow path 136 to form edge coating layers 210b, 220b by simultaneously applying an insulating coating liquid to the right edge of the coating layer 210 formed on the left side and the left edge of the coating layer 220 formed on the right side.

When slitting based on the cutting line CS in FIG. 14, each of the coating layer 210 and the coating layer 220 may be used to manufacture an electrode assembly. The coating layer 210 and the coating layer 220 may be a negative electrode or a positive electrode depending on the type of electrode active material slurry. These coating layers 210, 220 may be stacked together with the corresponding electrodes and separators, and then, for example, wound from one side around a winding axis to manufacture a jelly roll-type electrode assembly, thereby preparing a cylindrical battery. The insulating coating liquid capable of forming the edge coating layers 210a, 210b, 220a, 220b may include, for example, an inorganic filler such as Al₂O₃ and a polymer resin.

The edge coating layers 210a, 210b, 220a, 220b may be formed at the boundary between the coating layers 210, 220 and the uncoated portion in the substrate 200. The edge coating layers 210a, 210b, 220a, 220b may be formed so that at least a portion thereof overlaps the boundary between the coating layers 210, 220 and the uncoated portion. The edge coating layers 210a, 210b, 220a, 220b serve to prevent a short circuit between two electrodes of different polarities facing each other with a separator interposed therebetween. The edge coating layers 210a, 210b, 220a, 220b may cover the boundary between the coating layers 210, 220 and the uncoated portion with a width of 0.3 mm to 5 mm.

Referring to FIGS. 6, 7, 9, and 10 again, the improved structure of the slot die coater 100 according to the present disclosure includes a shim 130 that is particularly improved than in the prior art, and each flow path 134, 135, 136 of the shim 130 is configured to include a first manifold 137 for insulating coating at the supply position of the insulating coating liquid. The insulating coating liquid may be discharged along the X direction onto the substrate through the slit 138 communicating with the first manifold 137. The ends of each flow path 134, 135, 136 form outlets 134a, 135a, 136a through which the insulating coating liquid flows into the shim 130 and is discharged. In the enlarged drawings in FIGS. 7 and 10, the positions of the hole for insulating coatings 115 formed in the upper die 110 are also shown for reference.

The first manifold 137 serves to enable to stabilize the flow rate of the insulating coating liquid before the insulating coating liquid is discharged toward the outlets 134a, 135a, 136a through each flow path 134, 135, 136. The first manifold 137 is formed by being indented from the surface of the shim 130 at a position corresponding to the hole for insulating coating 115 to form a space for containing the insulating coating liquid supplied through the hole for insulating coating 115 in the upper die 110. Referring to FIGS. 8 and 11, the indentation shape of the first manifold 137 can be seen, and the indentation depth of the first manifold 137 will be denoted as MD.

In this way, in the present disclosure, the first manifold 137, which is an additional manifold, is formed on the shim 130, and thus, even if the positions of the hole for insulating coating 115 and the shim 130 are misaligned due to differences in assembly and processing, it is possible to ensure that there is no deviation in the flow rate of the insulating coating liquid discharged through the outlets 134a, 135a, 136a.

In particular, in the center second portion 133, the slit 138 is formed to be separated from the first manifold 137 on both sides so that the insulating coating liquid may be applied simultaneously to the right edge of the coating layer 210 formed on the left side and the left edge of the coating layer 220 formed on the right side. By forming the first manifold 137, the flow rate entering both sides through the slit 138 may be made as equal as possible.

The cross-sectional shape (cross-section along the Z direction) of the slit 138 may be rectangular. The slit 138 may have a constant width LW. In the examples shown in FIGS. 6, 7, 9, and 10, the slit 138 includes only a portion horizontal to the direction (X direction) of discharging the insulating coating liquid. For another example, the slit 138 may include both a horizontal portion and a perpendicular portion in the direction (X direction) of discharging the insulating coating liquid.

The slit 138 is formed in communication with one end of the first manifold 137 to discharge the insulating coating liquid from the first manifold 137 toward the outlet O by the shim 130. In addition, the slit 138 is formed by being indented from the surface of the shim 130. Referring to FIGS. 8 and 11, the indentation shape of the slit 138 can be seen, and the indentation depth of the slit 138 will be denoted as LD.

In configuring the first manifold 137, which is an additional manifold, and the slit 138 communicating therewith, as shown in FIGS. 8 and 11, by making the indentation depth MD of the first manifold 137 larger than the indentation depth LD of the slit 138, the leveling effect may be maximized and the flow rate deviation may be minimized (MD > LD). In the example of the conventional shim 50 described with reference to FIGS. 3 and 4, there is no consideration for the indentation depth of the hole 55a and the line 55b.

In the present disclosure, it is preferable that the projected area of the first manifold 137 onto the surface of the shim 130 is larger than the projected area of the hole for insulating coating 115 onto the surface of the shim 130. In other words, it is preferable that the first manifold 137 is wider than the hole for insulating coating 115 (the area of the portion parallel to the wide side of the die block is larger). In the conventional example described with reference to FIGS. 3 and 4, the size of the hole for insulating coating 62 and the size of the hole 55a in the shim 50 are the same with a diameter of C. According to the present disclosure, the first manifold 137 is wider than the hole for insulating coating 115. If the conventional hole for insulating coating 62 and the hole for insulating coating 115 of the present disclosure have the same size, the first manifold 137 of the present disclosure is wider than the conventional hole 55a.

The projection shape of the first manifold 137 onto the surface of the shim 130 may be a rectangle with a width MW perpendicular to the direction (X direction) of discharging the insulating coating liquid and a height MH parallel to the direction (X direction) of discharging the insulating coating liquid. In the examples shown in FIGS. 6, 7, 9, and 10, the width MW of the first manifold 137 is longer than the height MH, and the slit 138 has a shape extending in a straight line along the X direction toward the outlet 135a from the first manifold 137. As another example, the width MW and height MH of the first manifold 137 may be the same. In this case, the slit 138 may include both a portion extending in the Y direction and a portion extending in the X direction of the first manifold 137, as previously mentioned.

Preferably, the width MW of the first manifold 137 is equal to or greater than the diameter C of the hole for insulating coating 115. In addition, the width MW of the first manifold is larger than the width LW of the slit. The first manifold 137 may be indented into the shim 130 in a basic hexahedral shape, and each corner constituting the hexahedron may be rounded to facilitate liquid flow or prevent vortex generation.

Specifically, at first, the area of the first manifold 137 (projected area onto the surface of the shim 130) may be enlarged to a greater extent than the area of the hole for insulating coating 115, thereby making a greater leveling effect than in the prior art. Furthermore, if the indentation depth MD of the first manifold 137 is greater than the indentation depth LD of the slit 138, the leveling effect may be maximized.

In this way, according to the present disclosure, the first manifold 137 for insulating coating formed at a position corresponding to the hole for insulating coating 115 of the upper die 110 in the shim 130 may be included, and the indentation depth MD of this first manifold 137 may be made larger than the indentation depth LD of the slit 138, thereby sufficiently stabilizing the flow rate of the insulating coating liquid, which is an edge coating liquid, before being discharged to both sides at the supply position. When edge coating is required by splitting from one to two lines, the flow rate of the insulating coating liquid may be divided evenly. Even if die block assembly tolerances or other disturbances occur, the flow rate may be divided evenly due to the leveling role of the first manifold 137 formed on the shim 130. Therefore, the problem of varying coating width and thickness of the edge coating may be solved.

In this case, as in the example shown in FIGS. 6 to 8, the indentation depth MD of the first manifold 137 may be formed to be about 1/2 or more of the thickness d of the shim 130, or as in the example shown in FIGS. 9 to 11, it may be formed so deep that the first manifold 137 is a hole completely penetrating the shim 130.

In other words, in the shim 130 of FIGS. 6 to 8, the indentation depth MD of the first manifold 137 may be less than the thickness d of the shim 130 and may be more than 1/2 of the thickness d of the shim 130. The larger the indentation depth MD of the first manifold 137, the better, and to achieve a sufficient leveling effect, the indentation depth MD of the first manifold 137 may be at least 1/2 of the thickness d of the shim 130. The larger the indentation depth MD of the first manifold 137, the better, and thus, when maximizing the indentation depth MD of the first manifold 137 as in the shim 130 of FIGS. 9 to 11, the first manifold 137 may be formed in the form of a hole penetrating the shim 130.

In the shim 130 of FIGS. 9 to 11, the insulating coating liquid contained in the first manifold 137 should be prevented from leaking at the interface between the shim 130 and the lower die 120. In this embodiment, the slot die coater 100 is a horizontal die coater. Since the heavy upper die 110 presses and fastens the shim 130 to the lower die 120, there is a low risk that the insulating coating liquid may flow between the shim 130 and the lower die 120. The force of the upper die 110 pressing the shim 130 in the direction of gravity may prevent lifting at the interfaces of the upper die 110, the shim 130, and the lower die 120, and the insulating coating liquid contained in the first manifold 137 may not leak at the interface between the shim 130 and the lower die 120.

The smaller the pressure loss when the insulating coating liquid is injected from the hole for insulating coating 115 and spreads in the first manifold 137 (that is, the less there is to prevent the flow of fluid, the shorter the spreading length, and the wider the cross-sectional area), and the larger the pressure loss when the insulating coating liquid is discharged along the slit 138 formed in connection with the first manifold 137, the better the leveling. That is, based on the fact that the pressure loss in the slit 138 has a greater impact on flow distribution compared to the pressure loss in the first manifold 137, the pressure loss in the first manifold 137 is made as small as possible, and the pressure loss in the slit 138 is made as large as possible.

Looking at the shim 130 of the present disclosure shown in FIGS. 6 to 11 in more detail, it can be said that when a structure has two or more outlets (corresponding to the slits 138) in one insulating liquid supply portion (corresponding to the hole for insulating coating 115), a manifold and a land portion structure are configured in the shim 130 to uniformly distribute the flow rate to each outlet. Here, the manifold refers to the first manifold 137, and the land portion refers to the slit 138.

Compared to the pressure loss in the manifold, the pressure loss in the land portion should be as large as possible, or at the largest possible amount. To do so, the volume of the manifold should be as large as possible and the volume of the land portion should be as small as possible. To implement this, in forming the flow paths 134, 135, 136 including the first manifold 137 and the slit 138 in the shim 130, the indentation depth MD of the first manifold 137 is made larger than the indentation depth LD of the slit 138. The larger the indentation depth MD of the first manifold 137, the better.

In addition, the width MW of the first manifold 137 is made equal to or greater than the diameter C of the hole for insulating coating 115, thereby increasing the leveling area and volume. Therefore, preferably, the land portion thickness, that is, the indentation depth LD of the slit 138 < the indentation depth MD of the first manifold 137. The width MW of the first manifold 137 > the diameter C of the hole for insulating coating 115 > the land portion width, that is, the width LW of the slit 138.

Also, a second manifold for insulating coating may be additionally formed in the upper die 110 or lower die 120 to contain the insulating coating liquid for edge coating, so that the flow rate entering both sides may be as equal as possible.

Even if the shim 130 as described in FIGS. 6 to 11 is applied, there may also be cases where improvement is infeasible or insufficient depending on the liquid nature of the insulating coating liquid. In such cases, improvements are made by creating an additional manifold for insulating coating on the die block.

FIG. 12 is a view of a shim and an upper die provided in another slot die coater according to the present disclosure, and FIG. 13 is a bottom view of the upper die shown in FIG. 12.

Referring to FIGS. 12 and 13, a second manifold 117 indented into the upper die 110 is further formed at a position corresponding to the first manifold 137 of the shim 130. The hole for insulating coating 115 communicates with the bottom of the second manifold 117. The second manifold 117 may have the same area as the first manifold 137 and be indented into the upper die 110 in a basic hexahedral shape, and each corner constituting the hexahedron may be rounded to facilitate liquid flow or prevent vortex generation.

When using the shim 130 of the structure shown in FIGS. 6 to 8, the second manifold 117 is formed by being indented into the bottom of the upper die 110 as shown in the example of FIG. 12 to be in contact with the first manifold 137. Since the first manifold 137 and the second manifold 117 communicate with each other, there is an effect of increasing the volume of the first manifold 137.

When using the shim 130 of the structure shown in FIGS. 9 to 11, the second manifold 117 may be formed on the upper die 110 as shown in the example of FIG. 12, or it may be formed on the lower die 120. It may be formed on either the upper die 110 or the lower die 120, or it may also be formed on both the upper die 110 and the lower die 120.

As such, another slot die coater of the present disclosure may further include a second manifold 117 in at least one of the upper die 110 and the lower die 120 at a position corresponding to the first manifold 137. In this way, if an additional manifold (second manifold 117) is formed in the upper die 110 or lower die 120 at a position corresponding to the additional manifold (first manifold 137) formed on the shim 130, the leveling volume may be increased, resulting in a better edge coating uniformity effect.

In this way, when the second manifold 117 capable of containing the insulating coating liquid is additionally formed in the upper die 110 or the lower die 120, the flow rate of the divided insulating coating liquid through the slits 138 from the first manifold 137 to both sides may be equalized as much as possible. The left and right deviation may be reduced. In other words, if the second manifold 117 is formed in the upper die 110 or the lower die 120 at a position corresponding to the first manifold 137 formed on the shim 130, the leveling area secured by the first manifold 137 may be further increased, resulting in a better edge coating uniformity effect. On the other hand, it is desirable that the structure of the shim and the structure of the second manifold may be changed according to the physical properties of the insulating coating liquid used for edge coating to further promote edge coating uniformity.

The structure of the first manifold and the slit may be determined using the fact that the flow rate deviation varies depending on the liquid nature of the insulating coating liquid as shown below. FIG. 15 shows the relationship between fluid viscosity and shear rate. Referring to FIG. 15, the horizontal axis is shear rate and the vertical axis is viscosity.

Assuming that a fluid (a flowable object, for example, water) is a series of flat plates overlapping each other, if the top plate is pulled to the right with a force of F, the plates below follow at different speeds due to frictional force, wherein the plate closest to the pulling plate at the top follows quickly, and the plate relatively farthest away follows at the slowest rate, and the resulting distribution (slope) of speed that occurs at this time is the shear rate. That is, it is also called a velocity gradient and corresponds to the difference in velocity between the moving layer and the fixed layer divided by the distance between the two layers.

Viscosity is the value of the shear stress divided by the shear rate. Shear stress is the stress un response to shear load. That is, it is the value of the internal force reacting to the external force acting parallel to the cross-section of the object divided by the cross-sectional area.

Viscosity refers to the degree of viscosity. High viscosity means that the molecules that make up a liquid have a stronger attraction between them to hold each other tightly, thereby creating more resistance when passing through them.

If the shear stress is strong, the fluid may not flow easily, which can be seen as having a high viscosity. In any fluid, the longer the distance between the moving layer and the fixed layer, the longer the length of the layer that provides resistance to the moving layer, resulting in greater resistance and greater intermolecular attraction. If the intermolecular attraction is relatively small, there will be less accompanied, and thus the distance between the moving layer and the fixed layer will not be large. That is, the greater the distance between two layers, the greater the viscosity. In Newtonian fluids, the shear rate and shear stress are proportional, so the viscosity is always the same. However, most fluids are not Newtonian fluids and their viscosity varies. As shown in FIG. 15, as the shear rate increases, the viscosity decreases, and as the shear rate decreases, the viscosity increases.

The insulating coating liquid may be a Newtonian fluid, but it may not be a Newtonian fluid. Accordingly, when the insulating coating liquid flows from the first manifold 137 to the slit 138, the viscosity may change depending on changes in the shear rate. The reason for the difference in viscosity is the properties of the liquid due to shear thinning as shown in FIG. 15. Therefore, the first manifold 137 and the slit 138 may be designed by considering the ratio of the viscosity of the insulating coating liquid in the first manifold 137 to the viscosity of the insulating coating liquid in the slit 138.

FIGS. 16 and 17 are views showing design factors considered in designing a first manifold and a slit, and FIG. 17 is a cross-sectional view taken along line C-C' of FIG. 16.

In the illustrated example, the projection shape of the first manifold 137 is rectangular and has a width MW and a height MH. The width MW of the first manifold is equal to or greater than the diameter C of the hole for insulating coating. The slit 138 has a constant width LW and includes both a horizontal portion and a perpendicular portion in the direction of discharging the insulating coating liquid. The width MW of the first manifold 137 is greater than the width LW of the slit 138.

A comparative example is the shim 50 shown in FIG. 4. The diameter of the hole 55a for receiving the insulating coating liquid in the conventional shim 50 is the same as the diameter C of the hole for insulating coating. If the horizontal length of the line 55b connected to the hole 55a is LA, the width MW of the first manifold 137 in the shim 130 of the present disclosure is LA × 2 + C or less. Structurally, it is assumed the widths of the shims 50, 130 are the same.

Basically, the shear rate within a space similar to a pipe is proportional to the flow rate, so the shear rate increases as the flow rate increases. Accordingly, when the same fluid flows in a wide space, that is, at a low flow rate, the shear rate is low and the viscosity is high, and when it flows in a narrow space, that is, at a high flow rate, the shear rate increases and the viscosity is lowered. Therefore, since it is a concept of flow rate, the flow rate varies depending on the manifold height MH x indentation depth MD in the first manifold 137 and the width LW of the slit 138 x indentation depth LD in the slit 138 (the overall flow rate is the same). It can be said that the flow rate and shear rate are proportional, and the flow rate and viscosity are inversely proportional.

Preferably, the height MH and indentation depth MD of the first manifold 137 and the width LW and indentation depth LD of the slit 138 are determined so that the ratio of the viscosity of the insulating coating liquid in the first manifold 137 to the viscosity of the insulating coating liquid in the slit 138 is 1 to 4. The reason why the viscosity ratio is stated to be 1 to 4 is that the shear thinning viscosity is different for each insulating coating liquid.

FIGS. 18 to 21 are graphs showing the relationship between the height of the first manifold and the flow rate deviation at various viscosity ratios. The results obtained by calculating the flow rate deviation through simulation are shown. The flow rate deviation refers to the flow rate difference between the outlets (see 136a in FIG. 16) by the left and right slits 138 connected to the first manifold 137. Considering possible assembly deviations, the left and right flow rate deviation was calculated assuming that the position of the shim 130 and the position of the hole for insulating coating 115 do not exactly match but deviate by 1 mm to one side. The diameter C of the hole for insulating coating was set to 5 mm, and the width MW of the first manifold 137 was set to 5 mm or more. Based on the results of FIGS. 18 to 21, the manifold size according to the liquid may be determined.

FIG. 18 shows the case where the viscosity ratio is 1. It can be seen that this corresponds to the case where the insulating coating liquid is a Newtonian fluid. The horizontal axis in FIG. 18 is the size of MH relative to Ref. The Ref. of MH is C. MH was simulated by increasing from 1 time (100%) to 5 times (500%) relative to C. The vertical axis in FIG. 18 is the flow rate deviation (%). FIG. 18 shows a change in flow rate deviation according to MH change in each MD while increasing MD from 1 time (100%) to 10 times (1000%) relative to LD.

The flow rate deviation was assumed to be satisfactory if it was equal to or less than a predetermined value, for example, 5% (indicated by a dashed line in FIG. 18). When the viscosity ratio is 1, MD is 100% of LD (●), which is not considered appropriate because the flow rate deviation is more than 5% regardless of the MH size. That is, in the case of MD = LD, it is not suitable for resolving the flow rate deviation. For all other embodiments where MD was 150% to 1000% of LD, the flow rate deviation was 5% or less. Therefore, it can be seen that the flow rate deviation may be reduced by increasing MD larger than LD as proposed in the present disclosure, and as MD increases, the flow rate deviation may be further reduced, even to 2% or less.

In particular, the portion marked with a box in the graph of FIG. 18 is a preferable area in the process window. In that portion, MD > 3 × LD is satisfied. And, in that portion, MH is 250% to 400%. That is, 4 × C > MH > 2.5 × C is satisfied. In this way, when the viscosity ratio is 1, the most preferable design area can be said to be MD > 3 × LD, 4 × C > MH > 2.5 × C. The indentation depth MD of the first manifold 137 may be designed to satisfy MD > 3 × LD, or the depth combining the indentation depth MD of the first manifold 137 and the indentation depth of the second manifold 117 may be designed to satisfy MD > 3 × LD. As a preferred example, the indentation depth MD of the first manifold may be greater than three times the indentation depth LD of the slit 138.

In this way, when the ratio of the viscosity of the insulating coating liquid in the first manifold 137 to the viscosity of the insulating coating liquid in the slit 138 is 1, the depth combining the indentation depth MD of the first manifold 137 and the indentation depth of the second manifold 117 (if the second manifold is included) is made greater than 3 times the indentation depth LD of the slit 138. If the second manifold is not included, the indentation depth MD of the first manifold 137 is made greater than 3 times the indentation depth LD of the slit 138. In addition, when the width MW and the height MH of the first manifold 137 are the same, the height MH of the first manifold 137 is made greater than 2.5 times and smaller than 4 times the diameter C of the hole for insulating coating 115.

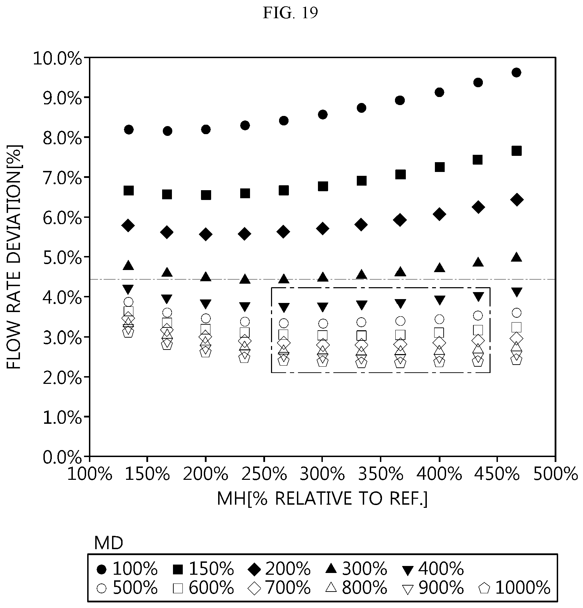

FIG. 19 shows the case where the viscosity ratio is 2. The horizontal axis in FIG. 19 is also the size of MH, as in FIG. 18. MH was simulated by increasing from 1 time (100%) to 5 times (500%) relative to C. The vertical axis in FIG. 19 is the flow rate deviation. FIG. 19 also shows a change in flow rate deviation according to MH change in each MD while increasing MD from 1 time (100%) to 10 times (1000%) relative to LD.

Here, the flow rate deviation was assumed to be satisfactory if it was equal to or less than 4. 5%. When the viscosity ratio is 2, the flow rate deviation is clearly 4.5% or less from the fact that MD is 400% of LD (▼), which is considered preferable for the embodiment where MD is 400% to 1000% of LD. In particular, the portion marked with a box in the graph of FIG. 19 is a preferable area in the process window. In that portion, MD > 4 × LD is satisfied and 4.5 × C > MH > 2.5 × C is also satisfied. The indentation depth MD of the first manifold 137 may be designed to satisfy MD > 4 × LD, or the depth combining the indentation depth MD of the first manifold 137 and the indentation depth of the second manifold 117 may be designed to satisfy MD > 4 × LD.

In other words, when the ratio of the viscosity of the insulating coating liquid in the first manifold 137 to the viscosity of the insulating coating liquid in the slit 138 is 2, the depth combining the indentation depth MD of the first manifold 137 and the indentation depth of the second manifold 117 (if the second manifold is included) is made greater than 4 times the indentation depth LD of the slit 138. If the second manifold is not included, the indentation depth MD of the first manifold 137 is made greater than 4 times the indentation depth LD of the slit 138. When the width MW and the height MH of the first manifold 137 are the same, the height MH of the first manifold 137 is made greater than 2.5 times and smaller than 4.5 times the diameter C of the hole for insulating coating 115.

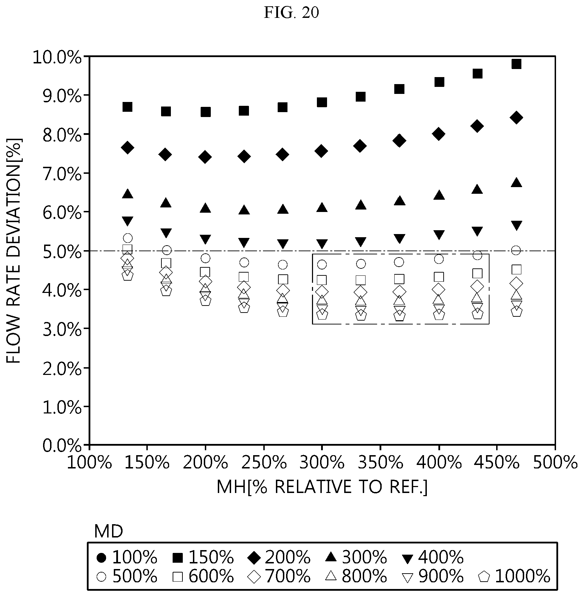

FIG. 20 shows the case where the viscosity ratio is 3. The horizontal axis in FIG. 20 is also the size of MH. MH was simulated by increasing from 1 time (100%) to 5 times (500%) relative to C. The vertical axis in FIG. 20 is the flow rate deviation. FIG. 20 also shows a change in flow rate deviation according to MH change in each MD while increasing MD from 1 time (100%) to 10 times (1000%) relative to LD.

The flow rate deviation was assumed to be satisfactory if it was equal to or less than 5%. When the viscosity ratio is 3, the flow rate deviation is clearly 5% or less from the fact that MD is 500% of LD (○), which is considered preferable for the embodiment where MD is 500% to 1000% of LD. In particular, the portion marked with a box in the graph of FIG. 20 is a preferable area in the process window. In that portion, MD > 5 × LD is satisfied and 4.5 × C > MH > 3 × C is also satisfied. In that area, the flow rate deviation is reduced by more than 50% and the lowest point of the flow rate deviation is included. The indentation depth MD of the first manifold 137 may be designed to satisfy MD > 5 × LD, or the depth combining the indentation depth MD of the first manifold 137 and the indentation depth of the second manifold 117 may be designed to satisfy MD > 5 × LD.

In other words, when the ratio of the viscosity of the insulating coating liquid in the first manifold 137 to the viscosity of the insulating coating liquid in the slit 138 is 3, the depth combining the indentation depth MD of the first manifold 137 and the indentation depth of the second manifold 117 (if the second manifold is included) is made greater than 5 times the indentation depth LD of the slit 138. If the second manifold is not included, the indentation depth MD of the first manifold 137 is made greater than 5 times the indentation depth LD of the slit 138. When the width MW and the height MH of the first manifold 137 are the same, the height MH of the first manifold 137 is made greater than 3 times and smaller than 4.5 times the diameter C of the hole for insulating coating 115.

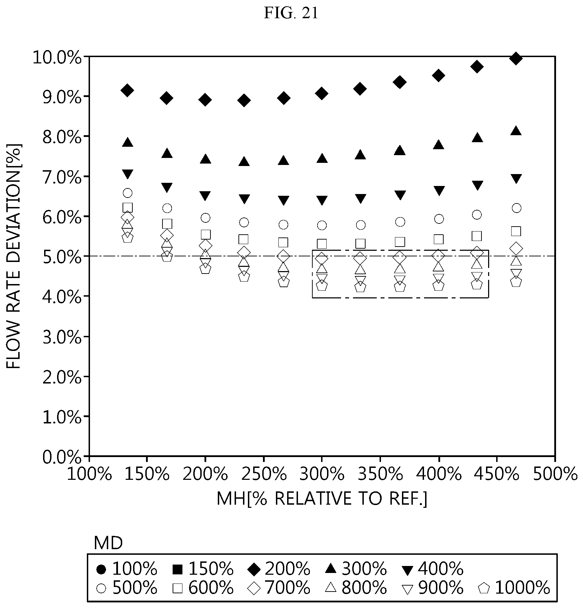

FIG. 21 shows the case where the viscosity ratio is 4. The horizontal axis in FIG. 21 is also the size of MH. MH was simulated by increasing from 1 time (100%) to 5 times (500%) relative to C. The vertical axis in FIG. 21 is the flow rate deviation. FIG. 21 also shows a change in flow rate deviation according to MH change in each MD while increasing MD from 1 time (100%) to 10 times (1000%) relative to LD.

The flow rate deviation was assumed to be satisfactory if it was equal to or less than 5%. When the viscosity ratio is 4, the flow rate deviation is clearly 5% or less from the fact that MD is 800% of LD (△), which is considered preferable for the embodiment where MD is 800% to 1000% of LD. In particular, the portion marked with a box in the graph of FIG. 21 is a preferable area in the process window. In that portion, MD > 5 × LD is satisfied and 4.5 × C > MH > 3 × C is also satisfied. The indentation depth MD of the first manifold 137 may be designed to satisfy MD > 5 × LD, or the depth combining the indentation depth MD of the first manifold 137 and the indentation depth of the second manifold 117 may be designed to satisfy MD > 5 × LD.

In other words, when the ratio of the viscosity of the insulating coating liquid in the first manifold 137 to the viscosity of the insulating coating liquid in the slit 138 is 4, the depth combining the indentation depth MD of the first manifold 137 and the indentation depth of the second manifold 117 (if the second manifold is included) is made greater than 5 times the indentation depth LD of the slit 138. If the second manifold is not included, the indentation depth MD of the first manifold 137 is made greater than 5 times the indentation depth LD of the slit 138. When the width MW and the height MH of the first manifold 137 are the same, the height MH of the first manifold 137 is made greater than 3 times and smaller than 4.5 times the diameter C of the hole for insulating coating 115.

As can be seen from the results in FIGS. 18 to 21, when the liquid has no difference between the viscosity in the slit 138 and the viscosity in the first manifold 137, that is, when the viscosity ratio is 1 as shown in FIG. 18, the effect of the first manifold 137 is very good. In addition, it is also preferable for the process window as long as the indentation depth MD of the first manifold 137 is at least three times the indentation depth LD of the slit 138. However, if the difference is more than 4 times (viscosity in the first manifold 137/viscosity in the slit 138 > 4), it is not effective. Therefore, for liquids with a viscosity ratio of 1 to 4, the effect of the first manifold 137 designed additionally to the shim 130 is expressed. The optimal point varies depending on the viscosity ratio, and the deeper the indentation depth MD of the first manifold 137, the better the effect. Accordingly, if the effect is small by making only the first manifold 137 on the shim 130, processing to make the second manifold 117 on the die blocks 110, 120 may be necessary.

### [Explanation of reference sings]

| | | | |
|---|---|---|---|
| 100: | slot die coater | 110: | upper die |
| 115: | hole for insulating coating | 117: | second manifold |
| 120: | lower die | 130: | shim |
| 134, 135, 136: | flow path | 134a, 135a, 136a: | outlet |
| 137: | first manifold | 138: | slit |
| 140: | manifold | | |

## Claims

1. A slot die coater (100) comprising:
an upper die (110) and a lower die (120);
a shim (130) interposed between the upper die (110) and the lower die (120) to define a slot (S) and an outlet (O); and
a hole for insulating coating (115) formed by vertically penetrating the upper die (110) adjacent to the outlet (O) of the upper die (110),
wherein the shim (130) comprises:
a first manifold (137) for insulating coating formed by being indented from the surface of the shim (130) at a position corresponding to the hole for insulating coating (115) to form a space for containing the insulating coating liquid supplied through the hole for insulating coating (115); and
a slit (138) formed by being indented from the surface of the shim (130) in communication with one end of the first manifold (137) to discharge the insulating coating liquid,
wherein the indentation depth (MD) of the first manifold (137) is greater than the indentation depth (LD) of the slit (138),
**characterized in that** the projection shape of the first manifold (137) onto the surface of the shim (130) is a rectangle having a width (MW) perpendicular to the direction of discharging the insulating coating liquid and a height (MH) parallel to the direction of discharging the insulating coating liquid, wherein the width (MW) of the first manifold is equal to or greater than the diameter (C) of the hole for insulating coating (115),
wherein the slit (138) has a constant width (LW) and comprises both a horizontal portion and a perpendicular portion in the direction of discharging the insulating coating liquid, or only a horizontal portion, wherein the width (MW) of the first manifold (137) is greater than the width (LW) of the slit (138),
wherein the indentation depth (MD) of the first manifold (137) is greater than 4 times the indentation depth (LD) of the slit (138), and the height (MH) of the first manifold (137) is greater than 2.5 times and smaller than 4.5 times the diameter (C) of the hole for insulating coating (115).

2. The slot die coater (100) according to claim 1, wherein the slit (138) is formed on both sides separated from the first manifold (137).

3. The slot die coater (100) according to claim 1, wherein the projected area of the first manifold (115) onto the surface of the shim (130) is larger than the projected area of the hole for insulating coating (115) onto the surface of the shim (130).

4. The slot die coater (100) according to claim 1, wherein the indentation depth (MD) of the first manifold (137) is equal to or greater than 1/2 of the thickness of the shim (130).

5. The slot die coater (100) according to claim 1, wherein the first manifold (137) is a hole penetrating the shim (130).

6. The slot die coater (100) according to claim 1, which further comprises a second manifold (117) for insulating coating formed by being indented into at least one of the upper die (110) and the lower die (120) at a position corresponding to the first manifold (137).

7. The slot die coater (100) according to claim 1, wherein the first manifold (137) has the same width (MW) and height (MH).

8. The slot die coater (110) according to claim 1, wherein the indentation depth (MD) of the first manifold (137) is greater than 5 times the indentation depth (LD) of the slit (138), and the height (MH) of the first manifold (137) is greater than 3 times and smaller than 4.5 times the diameter (C) of the hole for insulating coating (115).

## Patentansprüche

1. Schlitzdüsenbeschichter (100), umfassend:
eine obere Düse (110) und eine untere Düse (120);
eine Zwischenlage (130), die zwischen der oberen Düse (110) und der unteren Düse (120) angeordnet ist, um einen Schlitz (S) und einen Auslass (O) zu definieren; und
ein Loch zur Isolierbeschichtung (115), das durch vertikales Durchdringen der oberen Düse (110) angrenzend an den Auslass (O) der oberen Düse (110) gebildet ist,
wobei die Zwischenlage (130) umfasst:
einen ersten Verteiler (137) zur Isolierbeschichtung, der durch Vertiefen von der Oberfläche der Zwischenlage (130) an einer Position gebildet ist, die dem Loch zur Isolierbeschichtung (115) entspricht, um einen Raum zur Aufnahme der durch das Loch zur Isolierbeschichtung (115) zugeführten Isolierbeschichtungsflüssigkeit zu bilden; und
einen Schlitz (138), der durch Vertiefen von der Oberfläche der Zwischenlage (130) in Verbindung mit einem Ende des ersten Verteilers (137) gebildet ist, um die Isolierbeschichtungsflüssigkeit abzugeben,
wobei die Vertiefungstiefe (MD) des ersten Verteilers (137) größer ist als die Vertiefungstiefe (LD) des Schlitzes (138),
**dadurch gekennzeichnet, dass** die Projektionsform des ersten Verteilers (137) auf die Oberfläche der Zwischenlage (130) ein Rechteck mit einer Breite (MW) senkrecht zur Richtung der Abgabe der Isolierbeschichtungsflüssigkeit und einer Höhe (MH) parallel zur Richtung der Abgabe der Isolierbeschichtungsflüssigkeit ist, wobei die Breite (MW) des ersten Verteilers gleich oder größer ist als der Durchmesser (C) des Lochs zur Isolierbeschichtung (115),
wobei der Schlitz (138) eine konstante Breite (LW) aufweist und sowohl einen horizontalen Abschnitt als auch einen senkrechten Abschnitt in Richtung der Abgabe der Isolierbeschichtungsflüssigkeit oder nur einen horizontalen Abschnitt umfasst, wobei die Breite (MW) des ersten Verteilers (137) größer ist als die Breite (LW) des Schlitzes (138),
wobei die Vertiefungstiefe (MD) des ersten Verteilers (137) größer ist als das 4-fache der Vertiefungstiefe (LD) des Schlitzes (138), und die Höhe (MH) des ersten Verteilers (137) größer ist als das 2,5-fache und kleiner ist als das 4,5-fache des Durchmessers (C) des Lochs zur Isolierbeschichtung (115).

2. Schlitzdüsenbeschichter (100) nach Anspruch 1, wobei der Schlitz (138) auf beiden vom ersten Verteiler (137) getrennten Seiten ausgebildet ist.

3. Schlitzdüsenbeschichter (100) nach Anspruch 1, wobei die projizierte Fläche des ersten Verteilers (115) auf die Oberfläche der Zwischenlage (130) größer ist als die projizierte Fläche des Lochs zur Isolierbeschichtung (115) auf die Oberfläche der Zwischenlage (130).

4. Schlitzdüsenbeschichter (100) nach Anspruch 1, wobei die Vertiefungstiefe (MD) des ersten Verteilers (137) gleich oder größer ist als 1/2 der Dicke der Zwischenlage (130).

5. Schlitzdüsenbeschichter (100) nach Anspruch 1, wobei der erste Verteiler (137) ein die Zwischenlage (130) durchdringendes Loch ist.

6. Schlitzdüsenbeschichter (100) nach Anspruch 1, der ferner einen zweiten Verteiler (117) zur Isolierbeschichtung umfasst, der durch Vertiefung in mindestens eine von der oberen Düse (110) und der unteren Düse (120) an einer Position gebildet ist, die dem ersten Verteiler (137) entspricht.

7. Schlitzdüsenbeschichter (100) nach Anspruch 1, wobei der erste Verteiler (137) die gleiche Breite (MW) und Höhe (MH) aufweist.

8. Schlitzdüsenbeschichter (110) nach Anspruch 1, wobei die Vertiefungstiefe (MD) des ersten Verteilers (137) größer ist als das 5-fache der Vertiefungstiefe (LD) des Schlitzes (138), und die Höhe (MH) des ersten Verteilers (137) größer ist als das 3-fache und kleiner ist als das 4,5-fache des Durchmessers (C) des Lochs für Isolierbeschichtung (115).

## Revendications

1. Dispositif de revêtement à filière à fente (100) comprenant :
une filière supérieure (110) et une filière inférieure (120) ;
une cale (130) interposée entre la filière supérieure (110) et la filière inférieure (120) pour définir une fente (S) et une sortie (O) ; et
un trou pour revêtement isolant (115) formé en pénétrant verticalement la filière supérieure (110) de manière adjacente à la sortie (O) de la filière supérieure (110),
dans lequel la cale (130) comprend :
un premier collecteur (137) pour revêtement isolant formé en étant indenté depuis la surface de la cale (130) à une position correspondant au trou pour revêtement isolant (115) pour former un espace destiné à contenir le liquide de revêtement isolant fourni à travers le trou pour revêtement isolant (115) ; et
une fente (138) formée en étant indentée depuis la surface de la cale (130) en communication avec une extrémité du premier collecteur (137) pour décharger le liquide de revêtement isolant,
dans lequel la profondeur d'indentation (MD) du premier collecteur (137) est supérieure à la profondeur d'indentation (LD) de la fente (138),
**caractérisé en ce que** la forme en projection du premier collecteur (137) sur la surface de la cale (130) est un rectangle ayant une largeur (MW) perpendiculaire à la direction de décharge du liquide de revêtement isolant et une hauteur (MH) parallèle à la direction de décharge du liquide de revêtement isolant, dans lequel la largeur (MW) du premier collecteur est égale ou supérieure au diamètre (C) du trou pour revêtement isolant (115),
dans lequel la fente (138) a une largeur constante (LW) et comprend à la fois une partie horizontale et une partie perpendiculaire dans la direction de décharge du liquide de revêtement isolant, ou seulement une partie horizontale, dans lequel la largeur (MW) du premier collecteur (137) est supérieure à la largeur (LW) de la fente (138),
dans lequel la profondeur d'indentation (MD) du premier collecteur (137) est supérieure à 4 fois la profondeur d'indentation (LD) de la fente (138), et la hauteur (MH) du premier collecteur (137) est supérieure à 2,5 fois et inférieure à 4,5 fois le diamètre (C) du trou pour revêtement isolant (115).

2. Dispositif de revêtement à filière à fente (100) selon la revendication 1, dans lequel la fente (138) est formée sur les deux côtés séparés du premier collecteur (137).

3. Dispositif de revêtement à filière à fente (100) selon la revendication 1, dans lequel la surface projetée du premier collecteur (115) sur la surface de la cale (130) est plus grande que la surface projetée du trou pour revêtement isolant (115) sur la surface de la cale (130).

4. Dispositif de revêtement à filière à fente (100) selon la revendication 1, dans lequel la profondeur d'indentation (MD) du premier collecteur (137) est égale ou supérieure à 1/2 de l'épaisseur de la cale (130).

5. Dispositif de revêtement à filière à fente (100) selon la revendication 1, dans lequel le premier collecteur (137) est un trou traversant la cale (130).

6. Dispositif de revêtement à filière à fente (100) selon la revendication 1, qui comprend en outre un second collecteur (117) pour revêtement isolant formé en étant indenté dans au moins l'une de la filière supérieure (110) et de la filière inférieure (120) à une position correspondant au premier collecteur (137).

7. Dispositif de revêtement à filière à fente (100) selon la revendication 1, dans lequel le premier collecteur (137) a la même largeur (MW) et hauteur (MH).

8. Dispositif de revêtement à filière à fente (110) selon la revendication 1, dans lequel la profondeur d'indentation (MD) du premier collecteur (137) est supérieure à 5 fois la profondeur d'indentation (LD) de la fente (138), et la hauteur (MH) du premier collecteur (137) est supérieure à 3 fois et inférieure à 4,5 fois le diamètre (C) du trou pour revêtement isolant (115).
